# EUROPÄISCHE PATENTSCHRIFT

(11) **EP 2 443 064 B1**
(45) Veröffentlichungstag und Bekanntmachung des Hinweises auf die Patenterteilung: **04.09.2013**
(21) Anmeldenummer: 10722075.8
(22) Anmeldetag: 26.05.2010
(51) Int. Cl.: F01N 3/20, C01C 1/08

(54) **VORRICHTUNG ZUR VERDAMPFUNG EINER HARNSTOFF-WASSER-LÖSUNG**
APPARATUS FOR EVAPORATING A UREA-WATER SOLUTION
DISPOSITIF POUR L'ÉVAPORATION D'UNE SOLUTION D'URÉE-EAU

(30) Priorität: 17.06.2009 DE 102009025135
(43) Veröffentlichungstag der Anmeldung: 25.04.2012
(73) Patentinhaber: Emitec Gesellschaft für Emissionstechnologie mbH, 53797 Lohmar (DE)
(72) Erfinder: VORSMANN, Christian, 51105 Köln (DE); HODGSON, Jan, 53840 Troisdorf (DE); SCHEPERS, Sven, 53844 Troisdorf (DE)
(74) Vertreter: Rössler, Matthias
(86) Internationale Anmeldenummer: PCT/EP2010/057222
(87) Internationale Veröffentlichungsnummer: WO 2010/145924

(56) Entgegenhaltungen:
- DE-A1-102007 058 486
- US-A1- 2006 277 827

## Beschreibung

Die vorliegende Erfindung betrifft eine Vorrichtung zur Verdampfung einer Harnstoff-Wasser-Lösung, also insbesondere eine Verdampfungseinheit zur Erzeugung eines Gasstroms. Eine solche Vorrichtung findet insbesondere Anwendung zur Bereitstellung von gasförmigem Ammoniak für Abgasnachbehandlungssysteme bei Kraftfahrzeugen.

Insbesondere bei Diesel-Verbrennungskraftmaschinen hat es sich bewährt, dem von der Verbrennungskraftmaschine erzeugten Abgas Harnstoff in wässriger Lösung direkt oder, nach einer Abgas-externen Hydrolyse, Ammoniak zuzugeben. Hierbei kommt bei bekannten Verfahren ein Hydrolyse-Katalysator zum Einsatz, an dem aus dem Harnstoff Ammoniak gewonnen wird. Die wässrige HarnstoffLösung wird dem Abgas stromaufwärts eines Hydrolyse-Katalysators zugegeben, in den gasförmigen Zustand überführt und mit dem Hydrolyse-Katalysator in Kontakt gebracht. Der dabei generierte Ammoniak reagiert dann beispielsweise mit einem so genannten SCR-Katalysator (Selective Catalytic Reaction) weiter stromabwärts im Abgassystem mit den dort enthaltenen Stickoxiden zu molekularem Stickstoff und Wasser.

Bei der Verdampfung einer Harnstoff-Wasser-Lösung ist die Temperaturführung besonders schwierig. Dies gilt insbesondere dann, wenn die benötigten Mengen der Harnstoff-Wasser-Lösung einerseits und die verfügbaren Temperaturen im Abgas andererseits (beispielsweise während eine mobilen Anwendung) stark variieren. Wird eine Verdampfung nicht vollständig erreicht, können sich Zwischenprodukte bilden, die gegebenenfalls zur Verstopfung der Verdampfungseinheit führen können. Derartige unerwünschte Nebenprodukte sind beispielsweise wasserunlösliches Biuret, das sich aus Isocyansäure und Harnstoff bildet und Cyanursäure, welche das Trimerisierungsprodukt der Isocyansäure darstellt. Bei der Verdampfung eines Ammoniak-Vorläufers, insbesondere Harnstoff-Wasser-Lösung, wurde beobachtet, dass die Temperatureinbringung in die Flüssigkeit sehr schnell über einen kritischen Temperaturbereich hinweg erfolgen muss, um die Bildung der genannten unerwünschten, teilweise nur schwer wieder entfernbaren, Verbindungen zu vermeiden.

Die DE 10 2007 058 486 A1 offenbart eine Vorrichtung zur Verdampfung von Harnstoff-Wasser-Lösung. Die Harnstoff-Wasser-Lösung wird einem Kanal in einem Grundkörper zugeführt, wobei der Kanal im Verdampfungsabschnitt einen mäanderförmigen Verlauf aufweist, insbesondere um eine kompakte Vorrichtung zu erreichen. Auch wenn sich das Konzept für einige Lastpunkte als geeignet herausgestellt hat, so bestehen noch Probleme, auch bei unterschiedlichen Fördermengen in dem Verdampfungsabschnitt eine gleichmäßig gute Wärmeeinbringung zu realisieren und damit auch Ablagerungen zu vermeiden.

Hiervon ausgehend ist es Aufgabe der vorliegenden Erfindung, die mit Bezug auf den Stand der Technik geschilderten Probleme zumindest teilweise zu lösen. Insbesondere soll eine Vorrichtung zur Verdampfung einer Harnstoff-Wasser-Lösung angegeben werden, mit der ein schnelles und möglichst vollständiges Verdampfen der Harnstoff-Wasser-Lösung erreicht wird, wobei insbesondere die Bildung der unerwünschten Nebenprodukte deutlich gesenkt wird. Dies soll insbesondere auch bei den stark variierenden Anforderungen hinsichtlich unterschiedlicher Mengen der zu verdampfenden Harnstoff-Wasser-Lösung realisierbar sein. Außerdem soll die Vorrichtung geeignet sein, gegebenenfalls neben der Verdampfung noch weitere Möglichkeiten der Behandlung des Reduktionsmittel-Vorläufers bzw. die Umwandlung in Ammoniak zu realisieren.

Diese Aufgaben werden gelöst mit einer Vorrichtung gemäß den Merkmalen des Patentanspruchs 1. Weitere vorteilhafte Ausprägungen und Anwendungen der Erfindung sind in den abhängig formulierten Patentansprüchen angegeben. Es ist darauf hinzuweisen, dass die in den Patentansprüchen einzeln aufgeführten Merkmale in beliebiger, technologisch sinnvoller, Weise miteinander kombiniert werden können und weitere Ausgestaltungen der Erfindung aufzeigen. Die Erfindung wird zudem durch die Beschreibung, insbesondere im Zusammenhang mit den Figuren, weiter charakterisiert und präzisiert.

Die erfindungsgemäße Vorrichtung zur Verdampfung einer Hamstoff-Wasser-Lösung weist einen Förderkanal für die Harnstoff-Wasser-Lösung auf, der sich durch zumindest eine erste Zone und eine zweite Zone zur Einbringung von Wärmeenergie hindurch erstreckt, wobei die Zonen getrennt voneinander beheizbar sind, und der Förderkanal in der zweiten Zone zunächst in einen zweiten Eintrittsbereich einen mäanderförmigen Verlauf und danach einen geradlinigen Verlauf aufweist und der Förderkanal in der ersten Zone zunächst in einem Eintrittsbereich einen geradlinigen Verlaut und danach einen mäander förmigen Verlauf aufweist.

Die Vorrichtung ist bevorzugt ein eigenständiges Bauteil, das unabhängig betreibbar ist. Dazu kann die Vorrichtung beispielsweise nach Art einer Patrone mit einem eigenständigen Gehäuse ausgeführt sein.

In dieser Vorrichtung ist nun ein Förderkanal für die Harnstoff-Wasser-Lösung vorgesehen. Ganz besonders bevorzugt ist, dass genau nur ein Förderkanal bereitgestellt wird, durch den die zu verdampfende Harnstoff-Wasser-Lösung geführt wird. Für die Verdampfung der Harnstoff-Wasser-Lösung hat es sich als vorteilhaft erwiesen, dass die Harnstoff-Wasser-Lösung zunächst auf eine mittlere Temperatur vorkonditioniert wird, beispielsweise in einem Temperaturbereich oberhalb von 100 °C aber kleiner als 200 °C, bevor tatsächlich die zur Verdampfung erforderliche Wärmeenergie eingebracht wird. Aus diesem Grund durchdringt der Förderkanal wenigstens zwei Zonen, in denen die Wärmeenergie mit verschiedenen Ausmaßen und getrennt regelbar voneinander in den Förderkanal eingeleitet werden kann. Als besonders kritisch hat sich dabei der Übergang von der ersten Zone hin zur zweiten Zone, in der letztendlich die Verdampfung stattfindet, erwiesen. Die Unterschiede der Verdampfungsqualität in diesem Bereich haben ihren Ursprung darin, dass während einer mobilen Anwendung jeweils unterschiedliche Fördermengen in dem Verdampfer in den gasförmigen Zustand überführt werden müssen. Die Fördermengen variieren dabei so stark, dass allein die Temperaturführung dauerhaft nicht zur Vermeidung der unerwünschten Nebenprodukte führen kann. Die Fördermengen bzw. Verdampfungsmengen der Harnstoff_Wasser-Lösung betragen je nach Bedarf und Motorisierung bis hin zu 125 ml/min [Millimeter pro Minute]. Leidenfrost-Effekte, zu starke lokale Abkühlungen, zu geringe Wärmeeinbringung in die Harnstoff-Wasser-Lösung sind hier nur einige angesprochene Effekte, die einer Verdampfung bei einer sprunghaften Temperaturänderung beim Übergang von der ersten Zone hin zur zweiten Zone erschwert haben. Dies gilt insbesondere für Förderungen bis 15 ml/min und ganz besonders bis 2 ml/min.

Zur Erzielung eines deutlich besseren Verdampfungsergebnisses und zur Reduzierung der Verblockungsneigung des Förderkanals bei diesem stationären Betrieb wurde als zielführend herausgefunden, den Förderkanal in der zweiten Zone zunächst mäanderförmig und danach geradlinig zu gestalten. Mit einem mäanderförmigen Verlauf wird hier insbesondere beschrieben, dass sich der Förderkanal im Eintrittsbereich der zweiten Zone nicht geradlinig (z. B. entlang einer Längsachse) erstreckt, sondern bevorzugt eine Vielzahl von Schlingen, Schleifen, Wendungen oder dergleichen aufweist. Beim Durchströmen der Harnstoff-Wasser-Lösung in diesem Bereich wird aufgrund der erzwungenen Richtungswechsel ein intensiver Kontakt mit der Förderkanalwand und eine Durchmischung der Harnstoff_Wasser-Lösung erreicht, was zu einer schnelleren und vollständigeren Verdampfung führt.

Weiterhin wird als vorteilhaft angesehen, dass der Förderkanal in der zweiten Zone in einem zweiten Austrittsbereich einen mäanderförmigen Verlauf aufweist. Das heißt beispielsweise, dass die zweite Zone mit drei Bereichen ausgeführt ist, nämlich einem Eintrittsbereich, einem Zentralbereich und einem Austrittsbereich, wobei der Förderkanal direkt aneinander angrenzend folgende Verlaufsform aufweist: mäanderförmiger Verlauf, geradliniger Verlauf, mäanderförmiger Verlauf. Weiter ist bevorzugt, dass die einzelnen zweiten Bereiche unterschiedlich lang sind, insbesondere ist der zweite Zentralbereich länger ausgeführt als der zweite Eintrittsbereich, der wiederum bevorzugt länger ausgeführt ist als der zweite Austrittsbereich. Gegebenenfalls kann für jeden Bereich ein separates Heizelement vorgesehen sein, allerdings ist auch möglich, dass mehrere Heizelemente sich über einen Bereich erstrecken.

Darüber hinaus wurde als vorteilhaft erkannt, dass ein Übergangsbereich von der ersten Zone hin zur zweiten Zone der Förderkanal mit einem vergrößerten Querschnitt ausgeführt ist. Der Kanalquerschnitt kann beispielsweise im Bereich von 0,2 mm² bis 30 mm² ausgeführt sein, wobei der Förderkanal in dem Übergangsbereich bevorzugt mit einem Kanalquerschnitt von 10 mm² bis 16 mm², insbesondere ca. 12 mm², ausgeführt ist. Auch dieses Entspannungsvermögen der Hamstoff-Wasser-Lösung unmittelbar vor Eintritt in die zweite Zone hat sich als vorteilhaft zur Vermeidung von unerwünschten Nebenprodukten erwiesen.

Der Förderkanal weist in der ersten Zone zunächst in einem ersten Eintrittsbereich einen geradlinigen Verlauf und danach einen mäanderförmigen Verlauf auf. Bevorzugt weist diese erste Zone genau nur zwei Bereiche auf, wobei der Förderkanal direkt vom geradlinigen in den mäanderförmigen Verlauf übergeht. Bevorzugt ist, dass der erste Eintrittsbereich und der erste Austrittsbereich in etwa gleich lang sind und jeweils separat betreibbare elektrische Heizelemente vorgesehen sind.

Zudem wird auch als vorteilhaft angesehen, dass die erste Zone und die zweite Zone mittels eines den Förderkanal umfassenden Rohres verbunden sind. Das heißt mit anderen Worten auch, dass die erste Zone und die zweite Zone bevorzugt im Wesentlichen voneinander thermisch getrennt sind, so dass präzise die gewünschten Temperaturen in der ersten Zone und der zweiten Zone einstellbar sind. Damit kann im Übergangsbereich zwischen der ersten Zone und der zweiten Zone ein signifikanter Temperatursprung erreicht werden, der ebenfalls die Verdampfung ohne unerwünschte Nebenprodukte begünstigt. Während also beispielsweise der Förderkanal in der ersten Zone und der zweiten Zone über eine Wärmevermittlungsschicht (z. B. einen Aluminiumkörper oder Kupfergranulat) mit den Heizelementen verbunden ist, ist der Förderkanal im Übergangsbereich mit einem Rohr ausgebildet, das z. B. Wärme isolierend ausgeführt ist.

Weitergebildet wird die Erfindung auch dadurch, dass der Förderkanal mit einer Kapillare gebildet ist, die in Wärme leitendem Kontakt mit mindestens einem elektrischen Heizelement angeordnet ist. Die Kapillare ist beispielsweise ein selbständiges Bauteil, insbesondere nach Art eines Röhrchens. Je nachdem, welche Behandlung der Harnstoff-Wasser-Lösung in dieser Vorrichtung gewünscht ist, kann die Kapillare mit einem entsprechenden Material und/oder einer Oberflächenrauhigkeit ausgeführt sein. Soll die Kapillare beispielsweise auch eine hydrolytische Funktion erfüllen, kann die Oberflächenrauhigkeit im Bereich von 4 bis 20 µm [Mikrometer] liegen, wobei die Kapillare dann bevorzugt mit Titan gebildet ist. Bevorzugt ist jedoch auch, dass der Förderkanal gerade im zweiten Eintrittsbereich mit dem mäanderförmigen Verlauf eine geringe Oberflächenrauhigkcit hat, insbesondere kleiner 10 µm oder sogar kleiner 5 µm. Als elektrische Heizelemente werden insbesondere selbstregelnde Heizwiderstände vorgeschlagen, sogenannte PTC-Widerstände (PTC: Positive Temperature Coefficient). Hierunter wird ein positiver Temperatur-Koeffizient verstanden, der den Heizleiter selbstregelnd um eine Solltemperatur arbeiten lässt. Solche selbstregelnden Heizwiderstände werden beispielsweise aus Keramik-Materialien, wie beispielsweise Bariumtitanat-Keramiken und/oder dotierten Polymeren, aufgebaut. Solche selbstregelnden Heizwiderstände erlauben eine einfache Ansteuerung. Dabei sind die elektrischen Heizelemente bevorzugt nicht direkt mit der Kapillare bzw. dem Förderkanal in Kontakt, sondern es ist eine Wärmevermittlungsschicht vorgesehen, in die die elektrischen Heizelement und die Kapillare eingebettet sind. Diese Wärmevermittlungsschicht umfasst bevorzugt Kupfer und/oder Aluminium.

Für den Betrieb der hier erfindungsgemäßen beschriebenen Vorrichtung wird vorgeschlagen, dass die Harnstoff-Wasser-Lösung in der ersten Zone auf eine Temperatur im Bereich von 100 °C bis 180 °C vorgewärmt und in der zweiten Zone bei einer Temperatur im Bereich von 420 °C bis 490 °C verdampft wird. Demzufolge wird hier ein (nur) zweistufiges Aufheiz-Verfahren vorgeschlagen, das durch einen Temperatursprung von mehr als 200 °C charakterisiert ist. Das Verfahren ist insbesondere dazu geeignet, sehr kleine Mengen von Hamstoff-Wasser-Lösung zu verdampfen, beispielsweise mit einem mittleren Durchsatz von bis zu 10 ml/min. Gerade diese Mengen werden jedoch bei der mobilen Anwendung der Vorrichtung immer wieder auftreten, so dass hier der kritische Lastbereich angegeben ist. Erst durch den erfindungsgemäßen Aufbau gelingt es, auch bei diesen kleinen Durchsätzen eine Verblockung des Förderkanals sicher zu vermeiden.

Die Erfindung findet insbesondere Anwendung bei einem Kraftfahrzeug aufweisend eine Steuerung und ein Abgassystems mit einem Reduktionsmittelzugabesystem, wobei das Reduktionsmittelszugabesystem wenigstens eine erfindungsgemäße Vorrichtung aufweist und die Steuerung zur Durchführung des erfindungsgcmäßen Verfahrens für eine intermittierende Zugabe von Reduktionsmittel eingerichtet ist. Demnach wird die Vorrichtung zumindest zur Verdampfung von Harnstoff-Wasser-Lösung eingesetzt, die (gegebenenfalls nach in Kontaktbringen mit einem Hydrolyse-Katalysator als Ammoniak) dem Abgas in gasförmigem Zustand zugegeben wird. Folglich dient die Vorrichtung insbesondere zur Abgasexternen Verdampfung (und Hydrolyse) der Harnstoff-Wasser-Lösung. Das in der Vorrichtung bzw. im Abgassystem entstehende Ammoniak (Reduktionsmittel) erlaubt im Abgassystem eine Konvertierung von unerwünschten Stickoxiden in Anwesenheit eines so genannten SCR-Katalysators. Das SCR-Verfahren ist bekannt, so dass auf nähere Ausführungen verzichtet wird. Im Hinblick auf die Durchführung des Verfahrens sei noch angemerkt, dass eine "intermittierende" Zugabe insbesondere bedeutet, dass kein kontinuierlicher Fluss von Reduktionsmittel hin zum Abgassystem erreicht wird, sondern jeweils zu vorgegebenen Zeitpunkten dosierte Mengen des Reduktionsmittels bzw. der Hamstoff-Wasser-Lösung zugegeben werden.

Die Erfindung sowie das technische Umfeld werden nachfolgend anhand der Figuren erläutert. Es ist darauf hinzuweisen, dass die Erfindung nicht auf den Gegenstand der Figuren beschränkt ist. Es zeigen schematisch:
- Fig. 1:: eine bevorzugte Ausführungsvariante der erfindungsgemäßen Vorrichtung,
- Fig. 2:: eine Möglichkeit zur Integration der Vorrichtung in ein mobiles Abgassystem, und
- Fig. 3:: die Temperatureinbringung bei einer erfindungsgemäßen Vorrichtung in die Harnstoff-Wasser-Lösung.

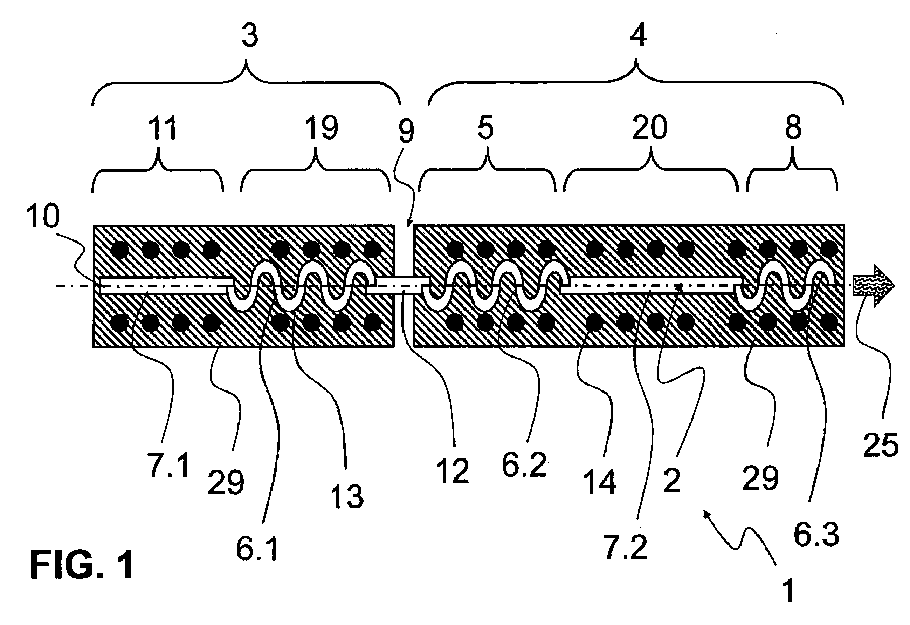

Fig. 1 zeigt eine bevorzugte Ausgestaltung der erfindungsgemäßen Vorrichtung zur Verdampfung einer Harnstoff-Wasser-Lösung. Dabei ist die Vorrichtung 1 mit zwei Zonen und fünf unabhängigen Heizelementen aufgebaut, wobei die erste Zone 3 und die zweite Zone 4 asymmetrisch gestaltet sind.

Die zu verdampfende Harnstoff Wasser-Lösung tritt beispielsweise links in die Vorrichtung 1 über den Förderkanal 2 ein. Der Förderkanal 2 ist dabei in einem ersten Eintrittsbereich 11 mit einem geradlinigen Verlauf 7 ausgeführt, bevor der Förderkanal 2 in einem mäanderförmigen Verlauf 6 im Bereich des unmittelbar angrenzenden Austrittsbereichs 19 übergeht. Innerhalb dieser ersten Zone 3, ebenso wie später in der zweiten Zone 4, ist der Förderkanal 2 mit einer Kapillare 13 gebildet, die in einer Wärmevermittlungsschicht 29 (hier schraffiert gekennzeichnet) eingebettet ist. In dieser Wärmevermittlungsschicht 29 sind auch die Heizelemente 14 vorgesehen, wobei in Fig. 1 hier veranschaulicht ist, dass sowohl der erste Eintrittsbereich 11 als auch der erste Austrittsbereich 19 jeweils ein getrennt regelbares Heizelement 14 hat. Bei der hier gezeigten Ausführungsvariante sind der erste Eintrittsbereich 11 und der erste Austrittsbereich 19 in etwa gleich lang ausgeführt, wobei beide Bereiche unmittelbar aneinander angrenzen und keine weiteren Bereiche in der ersten Zone 3 vorgesehen sind. Sowohl im ersten Eintrittsbereich als auch im ersten Austrittsbereich 19 wird mittels der Heizelemente 14 die gleiche Temperatur eingestellt, insbesondere in einem sehr engen Temperaturfenster, wie beispielsweise 110 °C bis 120 °C.

Nach Verlassen der ersten Zone 3 durchströmt die vorkonditionierte Harnstoff-Wasser-Lösung in Förderrichtung 25 den Übergangsbereich 9, wobei hier der Förderkanal 2 mit einem Rohr 12 gebildet ist. Hier ist gut zu erkennen, dass dieser Übergangsbereich 9 nicht mit der Wärmevermittlungsschicht 29 ausgeführt ist, so dass hier eine strikte Temperaturtrennung zwischen der ersten Zone 3 und der zweiten Zone 4 erreicht wird.

Ausgehend von diesem Übergangsbereich 9 strömt die Harnstoff Wasser-Lösung in Strömungsrichtung 25 in die zweite Zone 4 ein. Die zweite Zone 4 ist wiederum mit den separat betreibbaren Heizelementen 14 ausgeführt, die ebenso wie der Förderkanal mit der Kapillare 13 in der Wärmevermittlungsschicht 29 eingebettet sind. Erfindungsgemäß durchströmt die Harnstoff-Wasser-Lösung zunächst einen zweiten Eintrittsbereich 5, in dem der Förderkanal 2 einen mäanderförmigen Verlauf 6 aufweist. Daran anschließend ist ein zweiter Zentralbereich 20 vorgesehen, in dem der Förderkanal 2 geradlinig ist. Daran anschließend folgt noch ein zweiter Austrittsbereich 8, wobei hier der Förderkanal 2 wieder mit einem mäanderförmigen Verlauf versehen ist.

Bei dem hier vorgeschlagenen Aufbau ist zu erkennen, dass die erste Zone 3 und die zweite Zone 4 ungleich bzw. asymmetrisch aufgebaut sind. Weiter kann erkannt werden, dass auch der Aufbau der zweiten Zone 4 selbst, insbesondere hinsichtlich der Ausgestaltung des zweiten Eintrittsbereichs 5, des zweiten Zentralbereichs 20 und des zweiten Austrittsbereichs 8 ungleich aufgeführt ist, also asymmetrisch. Obwohl der Aufbau des Förderkanals 2 in der zweiten Zone 4 asymmetrisch gestaltet ist, können gleichwohl drei nebengeordnete, unabhängig voneinander betreibbare, Heizelemente 14 vorgesehen sein, wobei insbesondere auf den zweiten Zentralbereich 20 mehrere Heizelemente 14 einwirken. Dies ist unproblematisch, weil mit allen drei Heizelementen 14 im Wesentlichen die gleiche Temperatur (z. B. 440 °C - 470 °C) eingestellt wird.

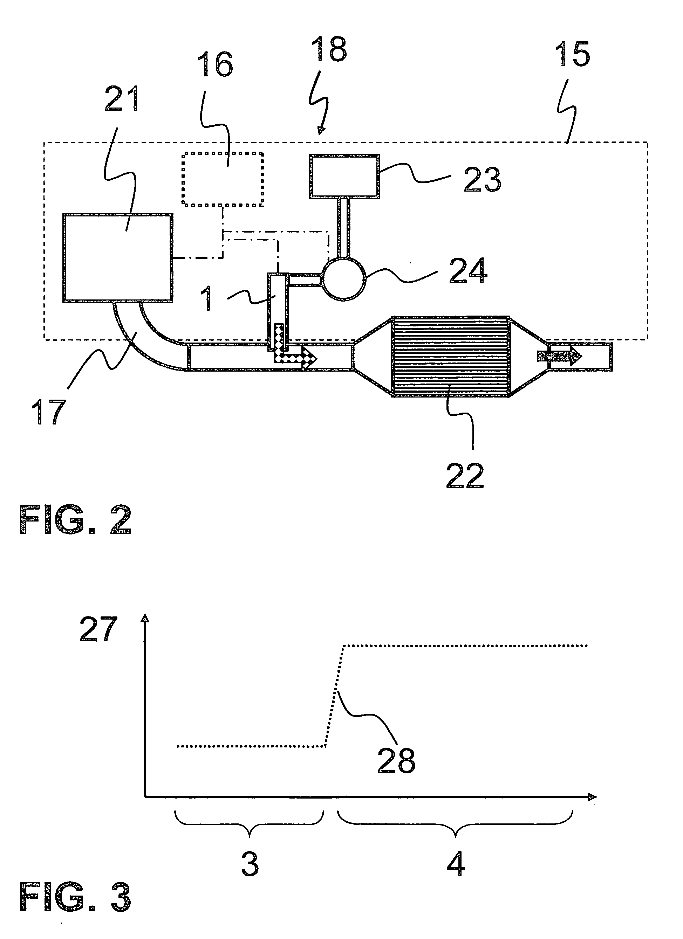

Fig. 2 zeigt schematisch ein Kraftfahrzeug 15 mit einem Motor 21. Das im Motor 21 erzeugte Abgas wird über ein Abgassystem 17 an die Umgebung abgegeben, wobei die Abgase im Abgassystem 17 noch behandelt werden, um den Austritt von Schadstoffen in die Umgebung zu minimieren. Das Abgassystem 17 in Fig. 2 zeigt einen einzelnen Katalysator 22, insbesondere einen SCR-Katalysator, wobei dem Abgas vor Auftreffen auf diesen Katalysator 22 ein Reduktionsmittel zugeführt wird. Das Reduktionsmittel ist hier beispielsweise dampfförmiger Harnstoff, bzw. wenn bereits eine Hydrolyse stattgefunden hat, dampfförmiger Ammoniak. Zur Eindüsung dieses Reduktionsmittels kommt insbesondere die erfindungsgemäß beschriebene Vorrichtung 1 zum Einsatz. Deshalb ist hier das Kraftfahrzeug 15 mit einem Reduktionsmittelzugabesystem 18 zum Abgassystem 17 ausgeführt. Das Reduktionsmittelzugabesystem 18 umfasst beispielsweise eincn Tank 23 für die Harnstoff-Wasser-Lösung sowie eine Fördereinheit 24, die bedarfsgerecht das Reduktionsmittel hin zur Vorrichtung 1 bzw. zum Abgassystem 17 leiten kann. Für eine bedarfsgerechte Zudosierung an Reduktionsmittel ist zudem eine Steuerung 16 vorgesehen, mit der der Betrieb der Vorrichtung 1 und/oder der Fördereinheit 24 realisiert ist. Für diesen Betrieb können gegebenenfalls auch Informationen zum Betrieb des Motors 21 verarbeitet werden, ebenso wie andere Messwerte oder Berechnungsergebnisse betreffend die Abläufe im Abgassystem.

Schließlich soll Fig. 3 noch veranschaulichen, dass mit Hilfe der Vorrichtung eine sprunghafte Temperaturänderung erreicht wird. Das Diagramm veranschaulicht die Temperatur 27 der Harnstoff-Wasser-Lösung beim Durchströmen der ersten Zone 3 und zweiten Zone 4. Besonderes Kennzeichen dieser Temperaturbehandlung ist, dass in dem kurzen Übergangsbereich zwischen der ersten Zone 3 und der zweiten Zone 4 ein signifikanter Temperatursprung 28 realisiert ist. Dadurch kann die Bildung von unerwünschten Nebenprodukten deutlich begrenzt werden.

Die Erfindung findet insbesondere Einsatz zur Verdampfung einer Harnstoff-Wasser-Lösung (wie auch unter dem Handelsnamen AdBlue bekannt), bevor diese mit dem Abgas in Kontakt gebracht wird. Gegebenenfalls kann im Rahmen der Vorrichtung auch eine Hydrolyse erfolgen, so dass bereits in der Vorrichtung der Harnstoff in Ammoniak umgewandelt wird, so dass erst der Ammoniak dem Abgas zugegeben wird. Grundsätzlich ist es aber auch möglich, den Harnstoff-Dampf direkt dem Abgas zuzusetzen, wobei dort durch eine Thermolyse Ammoniak entsteht. Auch eine Abgas-interne Hydrolyse ist möglich, wobei ein entsprechender Katalysator zum Einsatz gelangen kann.

Die Erfindung hat insbesondere die Zugabe kleiner Mengen des Reduktionsmittels bzw. der Harnstoff-Wasser-Lösung im Blick. Hier hatte sich herausgestellt, dass eine unzureichende Verdampfung und eine hohe Verblockungsneigung im Betrieb herkömmlicher Verdampfungseinheiten einsetzen. Selbstverständlich ist die Vorrichtung auch in der Lage, größere Durchsätze an Reduktionsmittel zu realisieren, wie sie für die mobile Anwendung bei Kraftfahrzeugen auftreten, wobei diese eher unkritisch sind. Die aufgezeigte Vorrichtung kann zudem sehr kompakt gebaut werden, beispielsweise nach Art einer Patrone, so dass diese platzsparend im Abgassystem untergebracht werden kann, gegebenenfalls auch als Nachrüstsatz.

### Bezugszeichenliste

- 1: Vorrichtung
- 2: Förderkanal
- 3: erste Zone
- 4: zweite Zone
- 5: zweiten Eintrittsbereich
- 6: mäanderförmiger Verlauf
- 7: geradliniger Verlauf
- 8: zweiter Austrittsbereich
- 9: Übergangsbereich
- 10: Querschnitt
- 11: erster Eintrittsbereich
- 12: Rohr
- 13: Kapillare
- 14: Heizelement
- 15: Kraftfahrzeug
- 16: Steuerung
- 17: Abgassystem
- 18: Reduktionsmittelzugabesystem
- 19: erster Austrittsbereich
- 20: zweiter Zentralbereich
- 21: Motor
- 22: Katalysator
- 23: Tank
- 24: Fördereinheit
- 25: Förderrichtung
- 26: Temperatur
- 27: Zeit
- 28: Temperatursprung
- 29: Wärmevermittlungsschicht

## Patentansprüche

1. Vorrichtung (1) zur Verdampfung einer Harnstoff-Wasser-Lösung aufweisend einen Förderkanal (2) für die Harnstoff-Wasser-Lösung, der sich durch zumindest eine erste Zone (3) und eine zweite Zone (4) zur Einbringung von Wärmeenergie hindurch erstreckt, wobei die Zonen getrennt voneinander beheizbar sind, und der Förderkanal (2) in der ersten Zone (3) zunächst in einem ersten Eintrittsbereich (11) einen geradlinigen Verlauf (7.1) und danach einen mäanderförmigen Verlauf (6.1) aufweist und der Förderkanal (2) in der zweiten Zone (4) zunächst in einem zweiten Eintrittsbereich (5) einen mäanderförmigen Verlauf (6.2) und danach einen geradlinigen Verlauf (7.2) aufweist.

2. Vorrichtung (1) nach Patentanspruch 1, bei der der Förderkanal (2) in der zweiten Zone (4) in einem zweiten Austrittsbereich (8) einen mäanderförmigen Verlauf (6.3) aufweist.

3. Vorrichtung (1) nach Patentanspruch 1 oder 2, bei der der Förderkanal (2) in einem Übergangsbereich (9) von der ersten Zone (3) hin zur zweiten Zone (4) mit einem vergrößerten Querschnitt (10) ausgeführt ist.

4. Vorrichtung (1) nach einem der vorhergehenden Patentansprüche, bei der die erste Zone (3) und die zweite Zone (4) mittels eines den Förderkanal (2) umfassenden Rohres (12) verbunden sind.

5. Vorrichtung (1) nach einem der vorhergehenden Patentansprüche, bei der der Förderkanal (2) mit einer Kapillare (13) gebildet ist, die in wärmeleitendem Kontakt mit mindestens einem elektrischen Heizelement (14) angeordnet ist.

6. Verfahren zum Betrieb einer Vorrichtung (1) nach einem der vorhergehenden Patentansprüche, bei dem die Harnstoff-Wasser-Lösung in der ersten Zone (3) auf eine Temperatur im Bereich von 100 °C bis 180 °C vorgewärmt und in der zweiten Zone (4) bei einer Temperatur im Bereich von 420 °C bis 490 °C verdampft wird.

7. Verfahren gemäß dem vorherigen Patentanspruch, bei dem die Harnstoff-Wasser-Lösung mit einem Durchsatz von bis zu 10 ml/min betrieben wird,

8. Kraftfahrzeug (15), aufweisend eine Steuerung (16) und ein Abgassystem (17) mit einem Reduktionsmittelzugabesystem (18), wobei das Reduktionsmittelzugabesystem (18) wenigstens eine Vorrichtung (1) gemäß einem der Patentansprüche 1 bis 5 aufweist und die Steuerung (16) zur Durchführung des Verfahrens für eine intermittierenden Zugabe von Reduktionsmittel eingerichtet ist.

## Claims

1. Device (1) for evaporating a urea-water solution, having a delivery duct (2) for the urea-water solution, said delivery duct extending through at least a first zone (3) and a second zone (4) for the introduction of heat energy, wherein the zones are heatable separately from one another, and, in the first zone (3), the delivery duct (2) initially, in a first inlet region (11), has a rectilinear profile (7.1) and thereafter has a meandering profile (6.1), and in the second zone (4), the delivery duct (2) initially, in a second inlet region (5), has a meandering profile (6.2), and thereafter has a rectilinear profile (7.2).

2. Device (1) according to claim 1, in which, in the second zone (4), the delivery duct (2) has a meandering profile (6.3) in a second outlet region (8).

3. Device (1) according to claim 1 or 2, in which, in a transition zone (9) from the first zone (3) to the second zone (4), the delivery duct (2) is formed with an enlarged cross section (10).

4. Device according to one of the preceding claims, in which the first zone (3) and the second zone (4) are connected by means of a tube (12) which also forms the delivery duct (2).

5. Device (1) according to one of the preceding claims, in which the delivery duct (2) is formed with a capillary (13) which is arranged so as to be in heat-conducting contact with at least one electric heating element (14).

6. Method for operating a device (1) according to one of the preceding claims, in which the urea-water solution is pre-heated in the first zone (3) to a temperature in the range from 100°C to 180°C, and is evaporated in the second zone (4) at a temperature in the range from 420°C to 490°C.

7. Method according to the preceding claim, in which the urea-water solution is operated with a throughput having a limit of 10 ml/min.

8. Motor vehicle (15) having a controller (16) and having an exhaust system (17) with a reducing agent metering system (18), wherein the reducing agent metering system (18) has at least one device (1) according to one of claims 1 to 5, and the controller (16) is set up to carry out the method for an intermittent metered addition of reducing agent.

## Revendications

1. Dispositif (1) pour l'évaporation d'une solution d'urée-eau, présentant un canal de transport (2) pour la solution d'urée-eau, lequel s'étend à travers au moins une première zone (3) et une deuxième zone (4) pour introduire de l'énergie thermique, les zones pouvant être chauffées séparément l'une de l'autre, et le canal de transport (2) présentant, dans la première zone (3), tout d'abord dans une première région d'entrée (11), une allure rectiligne (7.1 et ensuite une allure en méandres (6.1) et le canal de transport (2) présentant, dans la deuxième zone (4), tout d'abord dans une deuxième région d'entrée (5), une allure en méandres (6.2) et ensuite une allure rectiligne (7.2).

2. Dispositif (1) selon la revendication 1, dans lequel le canal de transport (2) présente, dans la deuxième zone (4), dans une deuxième région de sortie (8), une allure en méandres (6.3).

3. Dispositif (1) selon la revendication 1 ou 2, dans lequel le canal de transport (2) est réalisé, dans une région de transition (9) de la première zone (3) à la deuxième zone (4), avec une section transversale agrandie (10).

4. Dispositif (1) selon l'une quelconque des revendications précédentes, dans lequel la première zone (3) et la deuxième zone (4) sont connectées au moyen d'un tube (12) comprenant le canal de transport (2).

5. Dispositif (1) selon l'une quelconque des revendications précédentes, dans lequel le canal de transport (2) est formé avec un capillaire (13) qui est disposé en contact thermoconducteur avec au moins un élément chauffant électrique (14).

6. Procédé pour faire fonctionner un dispositif (1) selon l'une quelconque des revendications précédentes, dans lequel la solution d'urée-eau est préchauffée dans la première zone (3) à une température dans une plage de 100°C à 180°C, et est évaporée dans la deuxième zone (4) à une température dans une plage de 420°C à 490°C.

7. Procédé selon la revendication précédente, dans lequel la solution d'urée-eau est entraînée à un débit allant jusqu'à 10 ml/min.

8. Véhicule automobile (15) présentant une commande (16) et un système de gaz d'échappement (17) avec un système d'ajout d'agent réducteur (18), le système d'ajout d'agent réducteur (18) présentant au moins un dispositif (1) selon l'une quelconque des revendications 1 à 5, et la commande (16) étant prévue pour mettre en oeuvre le procédé en vue d'un ajout intermittent d'agent réducteur.
